(19) Europäisches Patentamt
European Patent Office
Office européen des brevets

(11) EP 0 587 470 B1

(12) FASCICULE DE BREVET EUROPEEN

(45) Date de publication et mention de la délivrance du brevet: **02.04.1997 Bulletin 1997/14**

(51) Int Cl.[6]: **H01M 2/16**

(21) Numéro de dépôt: **93402037.1**

(22) Date de dépôt: **10.08.1993**

(54) **Séparateur microporeux greffé pour générateur électrochimique et son procédé de fabrication**

Aufgepfropfter mikroporöser Separator für elektrochemischen Generator und Herstellungsverfahren

Grafted microporous separator for electrochemical generator and its manufacturing process

(84) Etats contractants désignés:
**DE FR GB**

(30) Priorité: **11.08.1992 FR 9209900**

(43) Date de publication de la demande:
**16.03.1994 Bulletin 1994/11**

(73) Titulaire: **SAFT**
**F-93230 Romainville (FR)**

(72) Inventeurs:
- **Gineste, Jean-Luc**
  **F-34080 Montpellier (FR)**
- **Pourcelly, Gérald, c/o SAFT**
  **F-86060 Poitiers Cedex 09, (FR)**
- **Brunea, John**
  **F-77210 Avon (FR)**
- **Perton, Françoise**
  **F-86190 Beruges (FR)**
- **Broussely, Michel**
  **F-86240 Liguge (FR)**

(74) Mandataire: **Fournier, Michel et al**
**c/o ALCATEL ALSTHOM,**
**Département de Propriété Industrielle,**
**30, avenue Kléber**
**75116 Paris (FR)**

(56) Documents cités:
**EP-A- 0 014 459** **JP-A-62 258 711**

- **PATENT ABSTRACTS OF JAPAN vol. 12, no. 143 (C-492)(2990) 30 Avril 1988 & JP-A-62 258 711 (ASAHI CHEM. IND. CO. LTD.) 11 Novembre 1987**
- **PATENT ABSTRACTS OF JAPAN vol. 12, no. 143 (C-492)(2990) 30 Avril 1988 & JP-A-62 258 711**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 587 470 B1

## Description

La présente invention concerne un générateur électrochimique comportant un séparateur microporeux greffé.

Dans un générateur électrochimique, l'électrode positive et l'électrode négative sont séparées par un matériau isolant dont le rôle est d'assurer la conduction ionique en évitant tout contact électrique entre les deux électrodes; il doit conserver ses propriétés pendant toute la durée d'utilisation du générateur. Afin de maintenir l'isolation électrique entre les deux électrodes, le séparateur doit être mécaniquement et chimiquement stable dans les conditions d'utilisation. D'autre part, une conductivité ionique élevée nécessite que le séparateur soit mouillé de manière uniforme par l'électrolyte. Enfin, la mise en oeuvre de ce séparateur dans une ligne de production industrielle requiert une bonne tenue mécanique pour qu'il soit aisément manipulable et résiste aux opérations successives.

Pour les générateurs rechargeables à anode de lithium, le séparateur est constitué d'un film microporeux de polymère, en particulier le polyéthylène ou le polypropylène. Ces films possèdent une stabilité suffisante vis-à-vis des électrolytes généralement utilisés, mais ils sont difficilement mouillables.

Une solution consiste à introduire dans l'électrolyte un additif; une autre possibilité est d'ajouter sur la surface du séparateur un agent mouillant. Ces substances ne sont pas parfaitement inertes, et leur dégradation conduit à une réduction de la durée de vie du générateur.

Les chercheurs se sont donc orientés vers l'utilisation de séparateurs greffés. Les monomères greffés sont des composés oléfiniques, principalement les acides acrylique et métacrylique, la vinyl-pyridine, la vinyl-pyrrolidone, la $\gamma$-butyrolactone (EP-0 262 846), et d'autres dérivés vinyliques substitués (US-4 376 168 et US-4 414 090).

Le greffage peut être effectué en présence d'un catalyseur peroxyde ou azoïque (US-4 287 275), ou d'un catalyseur métallique: argent colloïdal, platine, or, nickel, ou cuivre (US-3 376 168).

Une méthode plus efficace est d'utiliser l'effet de radiations ionisantes, telles que les rayons gamma émis par une source cobalt-60 (US-4 414 090), un faisceau d'électrons (US-4 283 442), les radiations ultra-violettes, l'émission plasma, ou bien encore l'ozonisation (US-4 206 275). L'irradiation et le greffage sont réalisés simultanément, ou en deux étapes (US-4 283 442).

Mais l'amélioration des propriétés des séparateurs greffés n'est observable que pour des électrolytes peu concentrés en sel (0,8M en $LiAsF_6$: EP-0 262 846).

La présente invention a pour but la réalisation d'un séparateur polymère greffé mouillable dans un électrolyte à teneur en sel élevée.

La présente invention a également pour but la fabrication d'un séparateur greffé possédant des propriétés améliorées, ainsi qu'une tenue mécanique et des conditions de production qui permettent son utilisation pour la fabrication industrielle de générateurs électrochimiques.

La présente invention a pour objet un séparateur pour générateur électrochimique constitué d'un film de polyoléfine microporeux greffé par au moins un monomère choisi parmi le diéthylène-glycol-diméthacrylate (DEGDM), l'acrylate de furfuryl (AF), et le mélange diéthylèneglycol-diméthacrylate/acide acrylique (DEGDM/AA).

Selon une forme d'exécution, ledit film est greffé par un mélange diéthylène-glycol-diméthacrylate/acide acrylique (DEGDM/AA), la proportion molaire de chacun des monomères étant comprise entre 40% et 60%.

L'utilisation du DEGDM, qui est un agent réticulant permet d'obtenir des films qui sont mouillables par exemple dans des électrolytes non aqueux, à base de carbonates de propylène (PC) et d'éthylène (EC), et dont la concentration en sel est supérieure ou égale à 1,5M. L'AA seul conduit à un mouillage imparfait qui limite la durée de vie, par contre l'association DEGDM/AA donne des durées de vie élevées, en particulier pour des générateurs rechargeables à anode de lithium.

Ledit film est choisi parmi les films microporeux de polyéthylène et ceux de polypropylène.

Selon un mode de réalisation, le taux de greffage global, qui est défini par la relation:

$$\text{taux de greffage \%} = \frac{\text{augmentation de masse par greffage}}{\text{masse du film avant greffage}} \text{X100},$$

du diéthylène-glycol-diméthacrylate est compris entre 15% et 50%.

Ledit taux de greffage global du mélange diéthylèneglycol-diméthacrylate/acide acrylique est compris entre 5% et 50%.

Pour des valeurs de taux de greffage global supérieures à 50%, la tenue mécanique du séparateur n'est plus suffisante pour permettre son utilisation dans des générateurs.

Selon un mode de réalisation, le greffage du monomère est réalisé en trois étapes:

- irradiation dudit film,
- stockage éventuel dudit film irradié, sa réactivité est conservée pendant plusieurs mois,
- immersion dudit film irradié dans la solution de greffage,comportant ledit monomère et un solvant choisi parmi l'eau, le méthanol, le butanol, et leur mélanges.

Ladite solution de greffage comporte en outre au moins un additif choisi parmi les sulfates de fer, de cuivre, de fer-ammonium (sel de Mohr), les chlorures de fer et de cuivre, et le bleu de méthylène. Ces additifs ont pour rôle de limiter les réactions parasites d'homopolymérisation des monomères en solution, par exemple le sel de Mohr, et de modérer le taux de greffage, comme le bleu de méthylène.

Ladite solution de greffage est à une température comprise entre 40 et 80°C, et le film est immergé dans ladite solution pendant une durée comprise entre 1 et 30 heures, suivant la proportion des différents monomères dans la solution et le taux de greffage visé.

Ladite irradiation est réalisée par bombardement dudit film par un faisceau d'électrons en présence d'oxygène pour former des sites peroxydiques et hydroperoxydiques. Le séparateur est irradié à sec par une source ionisante d'émission d'électrons, créant des radicaux libres qui, par réaction avec l'oxygène de l'air, créent des fonctions hydroperoxydiques. La dose d'irradiation est comprise entre 0,5Mrads et 4Mrads, de préférence 1Mrad. Une dose d'irradiation trop élevée fragilise le film et le rend cassant.

D'une part, le film ainsi irradié présente une grande réactivité permettant le greffage ultérieur; d'autre part, les sites créés par irradiation ont une longue durée de vie qui permet de les stocker plusiers mois à basse température.

Le greffage dudit monomère sur ledit film est effectué sur des sites peroxydiques et hydroperoxydiques obtenus par irradiation, par simple mise en contact du séparateur irradié et du monomère en solution. L'étape de greffage s'effectue dans un bain thermostaté, une élévation de la température provoque l'amorçage de la réaction de greffage par décomposition des sites peroxydiques et hydroperoxydiques.

La chaîne de réaction simplifiée en excluant les réactions secondaires, est:

irradiation:

$$-CH_2-CH_2- + e- \rightarrow -CH^{\cdot}-CH_2- + H^{\cdot}$$

oxydation:

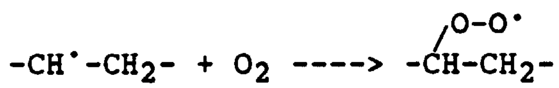

puis:

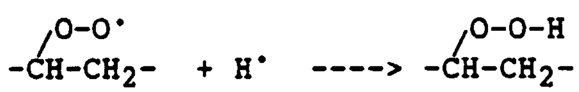

radical hydroperoxydique

et:

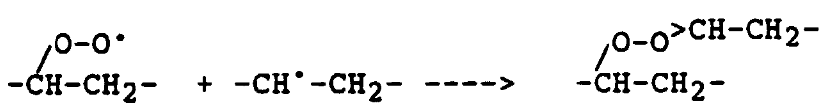

radical diperoxydique

Au point de vue industriel, la présente invention a l'avantage de ne pas utiliser la source d'irradiation pendant toute la durée du greffage mais seulement quelques minutes pendant l'opération d'irradiation, de fournir un produit de meilleure qualité par la faible teneur en homopolymère ce qui facilite la purification, et surtout de permettre un stockage de longue durée entre l'étape d'irradiation et le greffage.

La présente invention concerne l'utilisation du séparateur dans un générateur électrochimique à électrolyte non aqueux, dont l'anode est choisie parmi le lithium, un alliage de lithium, et un composé d'insertion du lithium, comme

le lithium inséré dans le carbone, et dont la cathode est choisie parmi les oxydes et les sulfures des métaux de transition, de préférence l'oxyde de vanadium, et les oxydes lithiés de manganèse, de nickel, et de cobalt.

Ledit générateur contient un électrolyte non aqueux, dont le solvant comporte au moins un ester, choisi parmi les carbonates de propylène, d'éthylène, de diméthyle et de diéthyle, et dont le soluté est choisi parmi les sels de lithium et leurs mélanges. De préférence, le solvant comporte en outre au moins un éther, choisi dans la famille des glymes. La concentration dudit soluté est comprise entre 1M et 2M.

De préférence, ledit électrolyte est composé d'un mélange de carbonate de propylène, de carbonate d'éthylène, et de diméthoxyéthane comme solvant, et de $LiAsF_6$ comme sel.

La présente invention concerne également l'utilisation du séparateur dans un générateur électrochimique dont l'électrolyte est une solution aqueuse alcaline.

D'autres caractéristiques et avantages de la présente invention apparaîtront à la lecture des exemples suivants, donnés à titre illustratif mais nullement limitatif.

EXEMPLE 1 Art antérieur Greffage de l'AA sur un film de polypropylène

Un film de polypropylène microporeux commercial (Celgard 2502 de Celanese Corp.) de 50µm d'épaisseur a été choisi comme support de greffage. Il est irradié en présence d'oxygène à l'aide d'un accélérateur d'électrons. La dose d'irradiation est de 2Mrad. Le film irradié est alors stocké à une température de -18°C pendant 6 mois.

La solution de greffage se compose de:

| | |
|---|---|
| AA | 25% en volume |
| Eau | 75% en volume |
| Acide sulfurique | $6{,}6.10^{-2}$ mole/l |
| Sulfate de fer | 1,25 g/l |

Le film irradié est immergé dans la solution de greffage. La solution est dégazée par bullage d'azote pendant 15 minutes, pour éliminer l'oxygène qui est un inhibiteur des réactions de greffage. Elle est maintenue dans un bain thermostaté à 65°C pendant 24 heures. Le film est ensuite lavé à l'eau, puis au méthanol, et séché à l'étuve à 60°C. Le taux de greffage obtenu est de 32% .

Quelque soit le taux de greffage, les séparateurs greffés par l'AA ne sont pas mouillables par un électrolyte PC/EC dont la concentration en sel de lithium est supérieure à 1,2M. Pour un taux de greffage de 32% et une concentration en sel de 1M, le mouillage est très lent, et la résistance électrique est de 23 $ohms.cm^2$.

EXEMPLE 2 Greffage du DEGDM sur un film de polypropylène

L'exemple 1 est reproduit à l'exception de la dose d'irradiation qui est de 1Mrads.

La solution de greffage se compose de:

| | |
|---|---|
| DEGDM | 19% en volume |
| Méthanol | 62% en volume |
| Eau | 19% en volume |
| Sulfate de fer-ammonium | 0,2g/l |
| Bleu de méthylène | 0,88g/l |

Le film irradié est immergé dans la solution de greffage, maintenue à 65°C, pendant 19 heures, puis lavé et séché comme décrit dans l'exemple 1. Le taux de greffage obtenu est de 32%.

Le tableau I donne, pour 4 échantillons de séparateur dont les taux de greffage varient de 16% à 37%, les résultats du test de mouillage (M), pour des concentrations en sel $LiAsF_6$ de 1M à 2M, et de la mesure de la résistance électrique (R) de films de polypropylène greffés au DEGDM (PD1 à PD4) à des taux de greffage (T) variables.

Un mouillage rapide est observé dans des électrolytes dont le solvant est constitué du mélange en parties égales (1/1) de PC et EC, et contenant un sel de lithium, tel que $LiAsF_6$, pour des concentrations variant de 1M à 2M. On rappelle que le film de polypropylène (P) non greffé n'est absolument pas mouillable par ces électrolytes

Dans le même électrolyte à une concentration en $LiAsF_6$ de 1M, la résistance électrique est mesurée avec un conductimètre dans une cellule en teflon. Celle-ci se compose de deux compartiments communicants, le séparateur greffé étant placé entre eux. Chaque compartiment comporte une électrode de platine plongeant dans du mercure. L'étanchéité est assurée par des joints torriques. La surface de séparateur est de $0{,}78cm^2$.

TABLEAU I

| S | T % | $LiAsF_6$ M | | | | | | | | R ohm.cm$^2$ |
|---|---|---|---|---|---|---|---|---|---|---|
| | | 2 | 1,82 | 1,67 | 1,54 | 1,33 | 1,18 | 1,11 | 1 | |
| P | 0 | o | o | o | o | o | o | o | o | - |
| PD1 | 16 | o | o | o | o | o | + | ++ | ++ | 8,1 |
| PD2 | 22 | +++ | +++ | +++ | +++ | +++ | +++ | +++ | +++ | 9,4 |
| PD3 | 32 | +++ | +++ | +++ | +++ | +++ | +++ | +++ | +++ | 9,1 |
| PD4 | 37 | +++ | +++ | +++ | +++ | +++ | +++ | +++ | +++ | 9,2 |

+++ → mouillage rapide
++ → mouillage lent
+ → mouillage très lent
o → pas de mouillage

EXEMPLE 3 Greffage du mélange DEGDM/AA

L'exemple 1 est reproduit, mais la dose d'irradiation est de 1Mrads, et la solution de greffage se compose de:

| | |
|---|---|
| AA | 18% en volume |
| DEGDM | 4,5% en volume |
| Méthanol | 50% en volume |
| Eau | 27,5% en volume |
| Sulfate de fer | 7,5 g/l |

Le film irradié est immergé dans la solution de greffage, celle-ci est dégazée, et maintenue à 65°C, pendant 20 heures. Le taux de greffage obtenu est de 13%.

La caractérisation du film obtenu est réalisée comme dans l'exemple 2. Le mouillage du film est rapide pour des concentrations en sel $LiAsF_6$ jusqu'à 1,7M, et légèrement plus lent jusqu'à 2M. La résistance électrique vaut 9,7 ohm.cm$^2$.

Le tableau II donne pour 6 échantillons de séparateur (S) les résultats du test de mouillage (M) pour des concentration en sel $LiAsF_6$ de 1M à 2M, et de la mesure de la résistance électrique (R) de films de polypropylène greffés avec le mélange DEGDM/AA (PDA1 à PDA6) à des taux de greffage (T) variants de 7,5% à 48%.

Pour des taux de greffage inférieurs à 5%, le séparateur n'est pas mouillable pas un électrolyte PC/EC à des concentrations en sel de lithium supérieures ou égales à 1M; pour des taux de greffage supérieurs à 50%, le film est très cassant et ne peut être manipulé.

TABLEAU II

| S | T % | $LiAsF_6$ M | | | | | | | | R ohm.cm$^2$ |
|---|---|---|---|---|---|---|---|---|---|---|
| | | 2 | 1,82 | 1,67 | 1,54 | 1,33 | 1,18 | 1,11 | 1 | |
| P | 0 | o | o | o | o | o | o | o | o | - |
| PDA1 | 7,5 | + | ++ | ++ | +++ | +++ | +++ | +++ | +++ | 11,7 |
| PDA2 | 12 | ++ | ++ | +++ | +++ | +++ | +++ | +++ | +++ | 10,4 |
| PDA3 | 13 | ++ | ++ | +++ | +++ | +++ | +++ | +++ | +++ | 9,7 |
| PDA4 | 29 | +++ | +++ | +++ | +++ | +++ | +++ | +++ | +++ | 14,8 |
| PDA5 | 38 | +++ | +++ | +++ | +++ | +++ | +++ | +++ | +++ | 15,1 |
| PDA6 | 48 | +++ | +++ | +++ | +++ | +++ | +++ | +++ | +++ | 13,1 |

+++ → mouillage rapide
++ → mouillage lent
+ → mouillage très lent
o → pas de mouillage

EXEMPLE 4 Cyclage lithium/lithium

Des bandes de polypropylène microporeux de 1,7m de long pour 41mm de large ont été greffées par un mélange DEGDM/AA comme décrit dans l'exemple 3.

Des taux de greffage variant de 7,6% à 48% ont été obtenus en faisant varier la composition de la solution de greffage et les conditions opératoires, comme par exemple la dose d'irradiation, le solvant, la concentration en inhibiteur d'homopolymérisation, etc....

Le séparateur greffé est placé dans une cellule de test comportant deux électrodes: l'une de lithium, l'autre en nickel sur laquelle est préalablement déposée une quantité connue de lithium. Un cyclage a été réalisé pour des concentrations en sel $LiAsF_6$ variables (1M à 2M) dans plusieurs électrolytes (Y), dont le solvant est à base de PC/EC éventuellement additionné de 2 parties (1/1/2) ou 3 parties (1/1/3) de diméthoxyéthane (DME).

Le nombre de cycles obtenus permet de calculer le rendement du lithium ($R_{Li}$) par la formule:

$$\left(1 - \frac{Q_i - Q_c}{NQ_c}\right) X\ 100$$

où $Q_i$ est la quantité lithium déposée initialement sur l'électrode de nickel; $Q_c$ est la quantité de lithium mise en jeu à chaque cycle; et N est le nombre total de cycles réalisés. Les valeurs obtenues pour 7 bandes (1 à 7) de séparateur (S) figurent dans le tableau III.

TABLEAU III

| S | T % | $LiAsF_6$ M | $R_{Li}$ % | | |
|---|---|---|---|---|---|
| | | | PC/EC 1/1 | PC/EC/DME 1/1/2 | PC/EC/DME 1/1/3 |
| 1 | 7,6 | 1 | 89 | 85 | - |
| | | 1,50 | 90 | 86 | - |
| | | 1,75 | 95 | - | - |
| 2 | 9 | 1 | 89 | 87 | - |
| | | 1,50 | 92 | 86 | 87 |
| | | 1,75 | 91 | - | - |
| 3 | 13,2 | 1 | 85 | 85 | - |
| | | 1,50 | 83 | 87 | - |
| | | 2 | 93 | - | - |
| 4 | 14,6 | 1 | 90 | 87 | - |
| | | 1,50 | 92 | 86 | 90 |
| | | 1,75 | 92 | - | - |
| | | 2 | 94 | - | - |
| 5 | 29 | 1 | 91 | - | - |
| 6 | 38 | 1 | 88 | - | - |
| 7 | 48 | 1 | 90 | - | - |

EXEMPLE 5 Test en générateurs rechargeables cylindriques

Les bandes de séparateur 2 et 4 de l'exemple 4 ont été choisies pour subir des essais de cyclage en générateurs rechargeables cylindriques spiralés (n°1 à 8) de hauteur 50mm, et de diamètre 25,5mm. Trois séries de générateurs ont été assemblées, combinant deux électrolytes (Y), semblables à ceux décrits dans l'exemple 4, avec les deux références de bandes de séparateur (S).

Les performances de ces générateurs ont été évaluées en cyclage à température ambiante jusqu'à fin de vie, dans les conditions suivantes:

décharge: $I_d$ = 200 mA jusqu'à 2,8 Volts,
charge: $I_c$ = 100 mA jusqu'à 3,8 Volts;

la 11ème décharge a été effectuée à un courant de 1A jusqu'à 2,5 Volts.

Le tableau IV regroupe les caractéristiques et les résultats obtenus pour ces générateurs: valeurs de tension moyenne en décharge ($U_d$) et de capacité déchargée ($C_d$) pour la 9ème et la 11ème décharge.

TABLEAU IV

| S | Y | n° | $U_d$ V | | $C_d$ Ah | |
|---|---|---|---|---|---|---|
| | | | 9 | 11 | 9 | 11 |
| 2 | PC/EC 1/1 LiAsF6 1,5M | 1<br>2 | 2,84<br>2,84 | 3,18<br>3,19 | 1,02<br>1,05 | 1,10<br>1,13 |
| 4 | PC/EC 1/1 LiAsF6 1,5M | 3<br>4<br>5 | 2,77<br>2,77<br>2,80 | 3,17<br>3,19<br>3,19 | 0,85<br>1<br>1,07 | 1,20<br>1,23<br>1,19 |
| 4 | PC/EC/DME 1/1/3 LiAsF6 1,5M | 6<br>7<br>8 | 2,99<br>-<br>2,94 | 3,22<br>3,16<br>3,21 | 1,12<br>-<br>1,18 | 1,17<br>1,22<br>1,22 |

Le tableau V fait la synthèse des résultats de cyclage obtenus avec ces générateurs rechargeables: nombre de cycles réalisés (N), capacité totale déchargée ($C_{Td}$) en Ah, rendement par rapport au lithium ($R_{Li}$), F.O.M. (figure of merit).

Le F.O.M. est définit par le rapport: $\frac{C_{Td}}{C_i}$ où $C_i$ est la capacité initiale équivalente à la masse de lithium initialement introduite dans le générateur.

TABLEAU V

| S | Y | n° | N | $C_{Td}$ Ah | $R_{Li}$ % | F.O.M. |
|---|---|---|---|---|---|---|
| 2 | PC/EC 1/1 LiAsF6 1,5M | 1<br>2 | 46<br>36 | 51,48<br>40,68 | 86,7<br>82,8 | 7,5<br>5,8 |
| 4 | PC/EC 1/1 LiAsF6 1,5M | 3<br>4<br>5 | 40<br>47<br>38 | 48,40<br>58,06<br>45,73 | 85,2<br>87,8<br>84,9 | 6,7<br>8,2<br>6,6 |
| 4 | PC/EC/DME 1/1/3 LiAsF6 1,5M | 6<br>7<br>8 | 53<br>55<br>64 | 61,97<br>66,21<br>79,47 | 88,5<br>89,2<br>90,9 | 8,7<br>9,2<br>11,1 |

Bien entendu la présente invention n'est pas limitée aux exemples donnés, en particulier ce séparateur peut être utilisé dans tout type de générateur à électrolyte non-aqueux, rechargeable ou non.

**Revendications**

1. Générateur électrochimique à électrolyte non-aqueux constitué d'un solvant et d'un sel, comprenant un séparateur constitué d'un film de polyoléfine microporeux greffé par au moins un monomère, caractérisé par le fait que ledit monomère est choisi parmi le diéthylène-glycol-diméthacrylate, l'acrylate de furfuryl, et le mélange diéthylène-glycol-diméthacrylate/acide acrylique.

**2.** Générateur selon la revendication 1, dans lequel ledit film est greffé par un mélange diéthylène-glycoldiméthacrylate/acide acrylique, la proportion molaire de chacun des monomères étant comprise entre 40% et 60%.

**3.** Générateur selon l'une des revendications 1 et 2, dans lequel le taux de greffage global du mélange diéthylène-glycol-diméthacrylate/acide acrylique est compris entre 5% et 50%, ledit taux étant défini par la relation:

$$\text{taux de greffage \%}= \frac{\text{augmentation de masse par greffage}}{\text{masse du film avant greffage}} \text{X100}$$

**4.** Générateur selon la revendication 1, dans lequel le taux de greffage du diéthylène-glycol-diméthacrylate est compris entre 15% et 50%, ledit taux étant défini par la relation:

$$\text{taux de greffage \%}= \frac{\text{augmentation de masse par greffage}}{\text{masse du film avant greffage}} \text{X100}$$

**5.** Générateur selon l'une des revendications précédentes, dans lequel ledit film est choisi parmi un film microporeux de polyéthylène et un film microporeux de polypropylène.

**6.** Générateur selon l'une des revendications précédentes, dans lequel ledit solvant comporte au moins un ester, choisi parmi les carbonates de propylène, d'éthylène, de diméthyle et de diéthyle, et dont le soluté est choisi parmi les sels de lithium et leurs mélanges.

**7.** Générateur selon l'une des revendications précédentes, dans lequel ledit solvant comporte en outre au moins un éther, choisi dans la famille des glymes.

**8.** Générateur selon l'une des revendications précédentes, dans lequel la concentration dudit sel est comprise entre 1M et 2M.

**9.** Générateur selon l'une des revendications précédentes, dans lequel ledit électrolyte est composé d'un mélange de carbonate de propylène, de carbonate d'éthylène, et de diméthoxyéthane comme solvant, et de $LiAsF_6$ comme sel.

**10.** Générateur selon l'une des revendications précédentes, dans lequel ladite anode est choisie parmi le lithium, un alliage de lithium, et un composé d'insertion du lithium, et dont la cathode est choisie parmi les oxydes et les sulfures des métaux de transition.

**11.** Générateur selon l'une des revendications précédentes, dans lequel ladite cathode est choisie parmi l'oxyde de vanadium, et les oxydes lithiés de manganèse, de nickel, et de cobalt.

**12.** Procédé de fabrication d'un séparateur pour générateur électrochimique à électrolyte non-aqueux selon l'une des revendications précédentes, dans lequel le greffage du monomère s'effectue selon les étapes suivantes:

- irradiation par bombardement dudit film par un faisceau d'électrons en présence d'oxygène pour former des sites peroxydiques et hydroperoxydiques,
- stockage éventuel dudit film irradié,
- immersion dudit film irradié dans la solution de greffage, comportant ledit monomère et un solvant choisi parmi l'eau, le méthanol, le butanol, et leurs mélanges,
- lavage dudit film par ledit solvant, puis séchage.

**13.** Procédé selon la revendication 12, dans lequel ladite irradiation est effectuée à une dose comprise entre 0,5Mrads et 4Mrads.

**14.** Procédé selon l'une des revendications 12 et 13, dans lequel ladite solution de greffage comporte en outre au moins un additif choisi parmi les sulfates de fer, de cuivre, de fer-ammonium (sel de Mohr), les chlorures de fer et de cuivre, et le bleu de méthylène.

**15.** Procédé selon l'une des revendications 12 à 14, dans lequel ladite solution de greffage est à une température comprise entre 40 et 80°C, et que le film est trempé dans ladite solution pendant une durée comprise entre 1 et 30 heures.

## Patentansprüche

1. Elektrochemischer Generator mit nicht-wässrigem Elektrolyten bestehend aus einem Lösungsmittel und einem Salz, wobei der Generator einen Separator enthält, der aus einer mikroporösen Polyolefinfolie besteht, die durch mindestens ein Monomer veredelt ist, dadurch gekennzeichnet, daß das Monomer unter Diäthylenglykol-dimethacrylat, Furfurylacrylat und der Mischung aus Diäthylenglykol-dimethacrylat und Acrylsäure ausgewählt wird.

2. Generator nach Anspruch 1, bei dem die Folie durch eine Mischung von Diäthylenglykol-dimethacrylat und Acrylsäure veredelt ist, wobei der Molanteil jedes der Monomere zwischen 40 und 60% liegt.

3. Generator nach einem der Ansprüche 1 und 2, bei dem der globale Pfropfgrad der Mischung aus Diäthylenglykol-dimethacrylat und Acrylsäure zwischen 5% und 50% liegt, wobei dieser Pfropfgrad durch die folgende Beziehung definiert ist:

$$\text{Pfropfgrad (\%)} = \frac{\text{Massezunahme durch die Aufpfropfung}}{\text{Folienmasse vor dem Pfropfen}} \times 100$$

4. Generator nach Anspruch 1, bei dem Pfropfgrad des Diäthylenglykol-dimethacrylat zwischen 15 und 50% liegt, wobei dieser Pfropfgrad durch die folgende Beziehung definiert ist:

$$\text{Pfropfgrad (\%)} = \frac{\text{Massezunahme durch die Aufpfropfung}}{\text{Folienmasse vor dem Pfropfen}} \times 100$$

5. Generator nach einem der vorhergehenden Ansprüche, in dem die Folie eine mikroporöse Folie aus Polyäthylen oder aus Polypropylen ist.

6. Generator nach einem der vorhergehenden Ansprüche, in dem das Lösungsmittel mindestens ein Ester enthält, das unter Propylencarbonat, Äthylencarbonat, Dimethylcarbonat und Diethylcarbonat ausgewählt ist und der gelöste Stoff unter den Lithiumsalzen und deren Mischungen ausgewählt ist.

7. Generator nach einem der vorhergehenden Ansprüche, in dem das Lösungsmittel mindestens zusätzlich einen Äther aus der Familie der Glyme enthält.

8. Generator nach einem der vorhergehenden Ansprüche, in dem die Konzentration des Salzes zwischen 1M und 2M liegt.

9. Generator nach einem der vorhergehenden Ansprüche, in dem der Elektrolyt aus einer Mischung von Propylencarbonat, Äthylencarbonat und Dimethoxyäthan als Lösungsmittel und aus $LiAsF_6$ als Salz besteht.

10. Generator nach einem der vorhergehenden Ansprüche, in dem die Anode ausgewählt wird aus Lithium, einer Lithiumlegierung und einer Einfügungsverbindung des Lithiums, während die Kathode unter den Oxiden und Sulfiden der Übergangsmetalle ausgewählt wird.

11. Generator nach einem der vorhergehenden Ansprüche, in dem die Kathode unter Vanadiumoxid, den lithiumhaltigen Oxiden von Mangan, Nickel und Kobalt ausgewählt wird.

12. Verfahren zur Herstellung eines Separators für einen elektrochemischen Generator mit nicht-wässrigem Elektrolyten nach einem der vorhergehenden Ansprüche, wobei die Aufpfropfung des Monomers in den folgenden Schritten erfolgt:

   - Bestrahlung der Folie durch Bombardierung mit einem Elektronenstrahl in Gegenwart von Sauerstoff, um peroxidische und hydroperoxidische Zentren zu bilden,
   - eventuelle Lagerung der bestrahlten Folie,
   - Eintauchen der bestrahlten Folie in die Pfropflösung, die das Monomer und ein Lösungsmittel enthält, das unter Wasser, Methanol, Butanol und deren Mischungen ausgewählt wird,
   - Waschen des Films mit dem Lösungsmittel und anschließende Trocknung.

13. Verfahren nach Anspruch 12, in dem die Bestrahlung mit einer Dosis zwischen 0,5 Mrad und 4Mrad erfolgt.

**14.** Verfahren nach einem der Ansprüche 12 und 13, bei dem die Pfropflösung weiter mindestens einen Zusatz enthält, der unter den Eisensulfaten, Kupfersulfaten, Eisen-Ammoniumsulfaten (Mohr-Salz), Eisenchloriden und Kupferchloriden sowie Methylenblau ausgewählt wird.

**15.** Verfahren nach einem der Ansprüche 12 bis 14, bei dem die Pfropflösung auf einer Temperatur zwischen 40 und 80°C gehalten wird und die Folie in diese Lösung während einer Dauer zwischen einer und dreißig Stunden eingetaucht wird.

## Claims

**1.** Non-aqueous electrolyte electrochemical generator constituted by a solvent and a salt, comprising a separator constituted by a microporous polyolefin film grafted with at least one monomer, characterised in that said monomer is selected from diethyleneglycol dimethacrylate, furfuryl acrylate and a diethyleneglycol dimethacrylate/acrylic acid mixture.

**2.** Generator according to claim 1 wherein said film is grafted using a diethyleneglycol dimethacrylate/acrylic acid mixture, the molar proportion of each of the monomers being between 40% and 60%.

**3.** Generator according to claim 1 or claim 2 wherein said global grafting percentage of the diethyleneglycol dimethacrylate/acrylic acid mixture, as defined by the relation:

$$\text{global graft percent} = \frac{\text{increase in mass on grafting}}{\text{film mass before grafting}} \times 100$$

is between 5% and 50%.

**4.** Generator according to claim 1 wherein the global grafting percentage of diethyleneglycol dimethacrylate, as defined by the relation:

$$\text{global graft percent} = \frac{\text{increase in mass on grafting}}{\text{film mass before grafting}} \times 100$$

is between 15% and 50%.

**5.** Generator according to claim 1 wherein said film is selected from microporous polyethylene and polypropylene films.

**6.** Generator as claimed in any one of the preceding claims wherein said solvent comprises at least one ester selected from carbonates of propylene and ethylene, dimethyl and diethyl carbonates, and wherein the solute is selected from lithium salts and their mixtures.

**7.** Generator as claimed in any one of the preceding claims wherein said solvent further comprises at least one ether selected from the glyme family.

**8.** Generator as claimed in any one of the preceding claims wherein the concentration of said salt is between 1 M and 2 M.

**9.** Generator as claimed in any one of the preceding claims wherein said electrolyte is composed of a mixture of polyethylene carbonate, ethylene carbonate, dimethoxane as the solvent and $LiAsF_6$ as the salt.

**10.** Generator as claimed in any one of the preceding claims wherein said anode is selected from lithium, a lithium alloy and an insertion compound of lithium, and wherein the cathode is selected from transition metal oxides and sulphides.

**11.** Generator as claimed in any one of the preceding claims wherein said cathode is selected from vanadium oxide and lithium-containing oxides of manganese, nickel and cobalt.

**12.** Process for producing a separator for a non-aqueous electrolyte electrochemical generator as claimed in any one of the preceding claims, in which process the monomer is grafted in three stages:

- irradiation of said film by bombarding said film with an electron beam in the presence of oxygen to form peroxide and hydroperoxide sites,
- if required, storage of said irradiated film,
- immersion of said irradiated film in the grafting solution comprising said monomer and a solvent selected from water, methanol, butanol and mixtures thereof,
- washing said film with said solvent, and then drying it.

**13.** Process according to claim 12 wherein the irradiation dosage is between 0.5 Mrads and 4 Mrads.

**14.** Process according to claim 12 or claim 13 wherein said grafting solution further comprises an additive selected from iron and copper sulphates, iron-ammonium sulphate (Mohr's salt), iron and copper chloride and methylene blue.

**15.** Process according to any one of claims 12 to 14 wherein said grafting solution is at a temperature of between 40 and 80°C and the film is steeped in said solution for a period of between 1 and 30 hours.